# EUROPEAN PATENT SPECIFICATION

(11) **EP 4 072 278 B1**
(45) Date of publication and mention of the grant of the patent: **06.11.2024**
(21) Application number: 20900002.5
(22) Date of filing: 07.12.2020
(51) Int. Cl.: A01K 1/02, A01K 1/03, E04B 7/06

(54) **A VARIABLE COLLAPSIBLE PEN ESPECIALLY FOR DOGS**
VARIABLER ZUSAMMENKLAPPBARER STIFT, INSBESONDERE FÜR HUNDE
ENCLOS PLIABLE VARIABLE, EN PARTICULIER POUR CHIENS

(30) Priority: 09.12.2019 CZ 20190760
(43) Date of publication of application: 19.10.2022
(73) Proprietor: Brezinova, Vlasta, 50601 Jicin (CZ)
(72) Inventor: Brezinova, Vlasta, 50601 Jicin (CZ)
(74) Representative: Lichtnecker, Markus Christoph
(86) International application number: PCT/CZ2020/050093
(87) International publication number: WO 2021/115501

(56) References cited:
- DE-A1- 19 946 399
- GB-A- 335 336
- US-A- 5 555 681
- US-A1- 2003 075 114
- US-A1- 2013 255 588
- US-A1- 2019 010 745

## Description

### Technical Field

The variable folding pen can be easily folded and unfolded and is designed especially for short-term placement of one or more dogs in public.

### Background Art

Keeping dogs is very widespread, dogs have accompanied humans since time immemorial. However, with the development of cities and large shopping centers in recent years, there is an increasing problem where to put the dog during a visit, for example at the store. Due to lack of other solutions, dogs tend to be tied, for example, to bicycle stands, which does not suit the dogs, and in addition, conflicts arise.

There are already various solutions available abroad. They are however expensive and have other shortcomings that prevent their expansion. For example, US2016262343 discloses an animal storage pen solution with automated access and payment with verified user identification and verified animal identification associated with animal vaccination and medical records. The pen is designated for the interior, it is not foldable, its high purchase price and operating costs are reflected in the price for the use of the pen by customers, as a result of which it is not widespread and used. In addition, it has mesh sides, and with more adjacent pens it is disadvantageous, because dogs can see each other.

Furthermore, various closed sheds are known, which may lack a natural air flow, provided with a fan or air conditioning. Such a device is disclosed for example by the document US2017027131. It is controlled by a software system and is equipped with a communication system for external control. The pen allows for monitoring of the pet and has a number of comfortable elements. It can be remotely controlled using a mobile application that communicates with the pen and can be used to access and control the pen. Despite being furnished with all the smart technologies, such devices are not suitable for dogs, as they create an environment for serious respiratory diseases, eye inflammation and possible acceleration of the spread of introduced diseases. An entirely enclosed space may induce stress in some dogs. Such solutions place high demand on maintaining hygiene, this increases the possibility of infections, parasites, etc.

Furthermore, document CZ 269216 discloses a portable shed for breeding calves. It is an open shed with a small yard. The solution is not usable for use in public, does not correspond to short-term placement of the dog, no security for the dog or the surroundings is ensured.

Document AU 2015218420 discloses a solution for a portable folding pen for animals, which is intended for personal use, for securing one's own dog, e.g. in a car, in a cottage, in a hotel, etc. Due to the possibility of theft of the container and the dog, it cannot be used in public spaces. Similarly, various portable cages are available on the market, designed for the personal needs of the owner for one dog, which are only suitable for indoor use or travel. Additionally, these are not robust and may catch the claws, the animal cannot be left without supervision for a longer time.

Document CZ 14144 relates to modular pens or aviaries, consisting of interconnected panels. The assembly and disassembly of the pen is complex, and it obstructs the space after assembly.

Document US 2013/255588 A1 discloses an animal run having a plurality of side panels operable to be pivotally mounted along a central plane.

Document US 2019/010745 A1 discloses an animal enclosure including a left side wall, a shared central side wall, a front wall and a rear wall with a guillotine door assembly mounted on the rear wall.

Also, roofless collapsible mobile pens on wheels are also known, designed for roofed spaces such as halls, barns. They are difficult to assemble for the general public, tools are required. Wheels are required for assembly and disassembly, as the pen is high and heavy and therefore cannot be firmly anchored.

The "parking spaces" for dogs abroad are the result of the effort for maximum simplification and cost reduction, these, however, only delimit the space for the dog at the store. This area is marked by an elevated podium, where the dog is only tied with the possibility of access to water, where a sick dog could have drunk, there is absolutely no security for both the dog and passing customers, there is no security for the dog against theft, the possibility of hygiene on the artificial turf covering the podium is not easy, there is easy contact with other dogs, not only the tied ones (barking at each other) but also free-running ones.

### Summary of Invention

The invention is set out in the appended claims.

The variable collapsible pen especially for dogs according to the invention, comprises at least n rear frames made of corrosion-resistant material, where n is greater than or equal to 1, provided with a back and formed by stems of corrosion-resistant material interconnected by crossbeams of corrosion-resistant material. Each rear frame comprises two stems, the n-th stem fitted with a foot at the bottom with anchoring holes and the (n+1)-th one fitted with a foot at the bottom with anchoring holes, interconnected at lest with the top crossbeam, center crossbeam and bottom crossbeam.

The first stem is provided in its bottom half under the level of the center crossbeam at least on one side with three hinges for the outer side panel, with which it is connected to the side panel frame, filled with an opaque panel provided in its bottom third with a horizontal flat bar affixed to the side panel frame provide with the counterpart of the locking mechanism.

The center crossbeam is provided with at least two roof hinges with which it is connected to the roof frame with roof panel, provided with at least two locks against unintentional folding of the canopy, and at least two first mounts of the roof spring which are connected via the roof spring with the second mounts of the roof spring in the top part of the stem.

The top crossbeam is provided with at least two counterparts of the lock against unintentional folding of the canopy.

The second up to the (n+1)-th stems are provided in their bottom half under the level of the center crossbeam at least on one side with three hinges for the outer side panel, with which it is connected to the (n-1)-th side panel frame, provided with a lock against unintentional opening having an opaque panel and which is connected via door hinges with the door frame with a transparent perforated door panel and provided with a locking mechanism,

The second up to the n-th inner side panels are provided from the outer side with a horizontal flat bar affixed to the inner side panel frame and provided with the counterpart of the locking mechanism.

In another variant, the stems are provided with holes for attachment to the wall, which also forms the back.

In a preferred embodiment, the door frame is provided with a collapsible handle and the inner side frame is provided on the outside with a collapsible side handle.

The perforation of the transparent breathable door panel is preferably implemented by circular ventilation holes with a diameter of 2 cm. Ventilation with the above embodiment is efficient and at the same time safe for dogs.

In another preferred embodiment, the inner side panel frame, the outer panel frame, and the bottom door on the side away from the rear frame are provided with a castor wheel.

In a preferred embodiment, the horizontal flat bar is provided with mounts for a chain with a snap-ring for small dogs and for a chain with a snap-ring for medium dogs.

The canopy is preferably provided with an elastic rope with a ring fixed in the middle for attachment to the rope mount located on the outside of the door panel and fixed with two mounts.

In another preferred embodiment, the stem is provided in its bottom half under the level of the center crossbeam on both sides with at least three hinges for the outer side panel, with which it is connected to the side panel frame, and the second up to (n+1)-th stems are provided in their bottom half under the level of the center crossbeam on both sides with at least three hinges for the inner side panel, with which it is connected to the (n-1)-th inner side panel frame.

The bottom crossbeam is preferably provided on at least one side with one mount of a chain with snap-ring, and a snap-ring mount.

The roof overlapping the pen is preferably fixed to the stems from above. The roof may be additionally supported by pillars provided with holders for accessories selected from the group of wastebaskets, bags, disposable absorbent floor mats, disposable gloves, disposable cleaning disinfectant wipes, treats, toys, disposable bowls, water barrels.

The space next to the pen under the overhanging roof can be equipped with a bench and/or a table.

The canopy and/or roof are preferably provided with a camera system from the inner side.

The roof and/or canopy are preferably provided with a solar panel for electrical system selected from the group of: lighting, heating, locking, audio guide.

In a preferable embodiment, the outer side panel frame is provided with a fixed handle on the outer side. In the most preferred embodiment, the outer side panel frame is provided with a lock against unintentional opening, and the inner side panel frame is provided with a lock against unintentional opening. The locks against unintentional opening are preferably provided with magnets.

Preferably, the inner side panel hinge and the outer side panel hinge have the angle of opening of 90°, and the door hinge and the roof hinge have the angle of opening of 180°.

The floor in the space for unfolding the pen is preferably provided with an impact rubber plate.

The transparent and clear panels may be preferably made of materials selected from the group of: clear plexiglass, tinted plexiglass, polycarbonate with a UV film.

The opaque panels are preferably washable and are selected from the group of plastic, recycled plastic.

In the most preferred embodiment, the variable collapsible pen especially for dogs is treated with a disinfectant coating. Such coating, for example, contains silver particles.

The advantage of the solution according to the present invention is variability. In the first variant, the variable collapsible pen is attached to a wall, in the second, spatial variant, it can be placed freely in the space. In the third variant, the variable collapsible pen is placed in an already existing interior space, wherein this variant can also be used without a roof. For all variants, it is important to observe a firm attachment to the ground.

The device may be designated for a single dog, and it can house multiple dogs according to the respective number of boxes. The pen can be folded and unfolded and it is designated especially for a short-term placement of dogs in public. It provides safety for the dog and the passers-by. Unfolding and folding is easy for everyone, so it can be self-service. When folded on a wall it does not obstruct the space, in the case of the roofed variant it serves as protection of persons against bad weather.

The pen has a natural air flow even with a full roofing with bad weather, it does not act as a closed space on the dog, and at the same time it is designed for more dogs so that they do not see each other, and mutual contact between dogs is also prevented. The maintenance of hygiene in it is simple, there is no possibility of infectious and polluted environment, it can be locked and thus secure the dog. Easy and hygienic watering of dogs is provided with disposable bowls, or with an own water barrel if running water is not available. The variant provided with a roof against bad weather protects both dogs and people from rain.

The variable collapsible pen also increases the level of public services provided, as well as, for example, urban furniture or shopping center equipment: installation of wastebaskets, bicycle stands, benches, shelters at bus stops or covered places for shopping trolleys, etc.

### Brief Description of Drawings

**Fig.1**

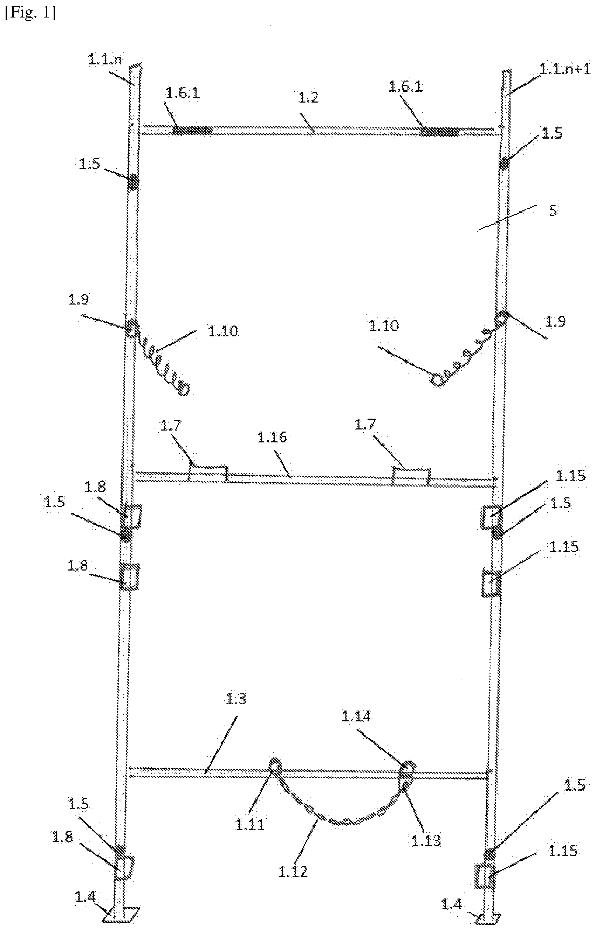

   [Fig.1] represent a detail of the frame,
**Fig.2**

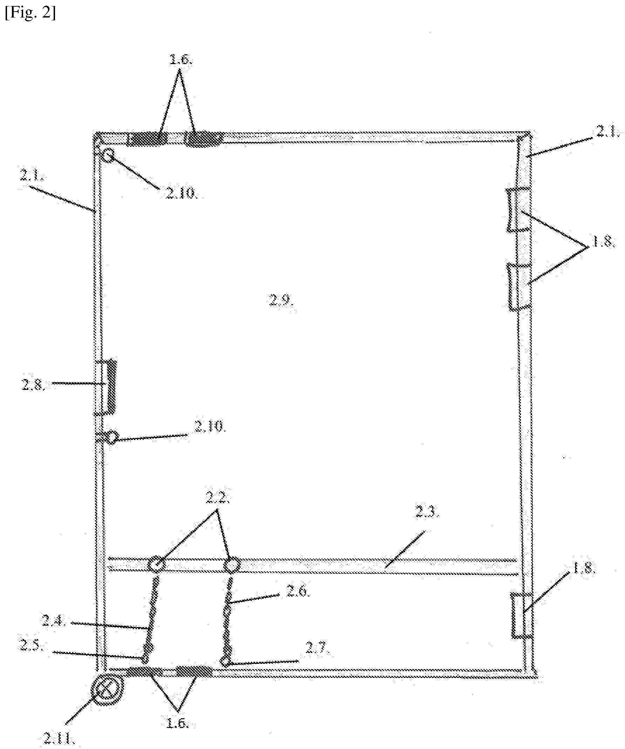

   [Fig.2] represent detail of the outer side panel,
**Fig.3**

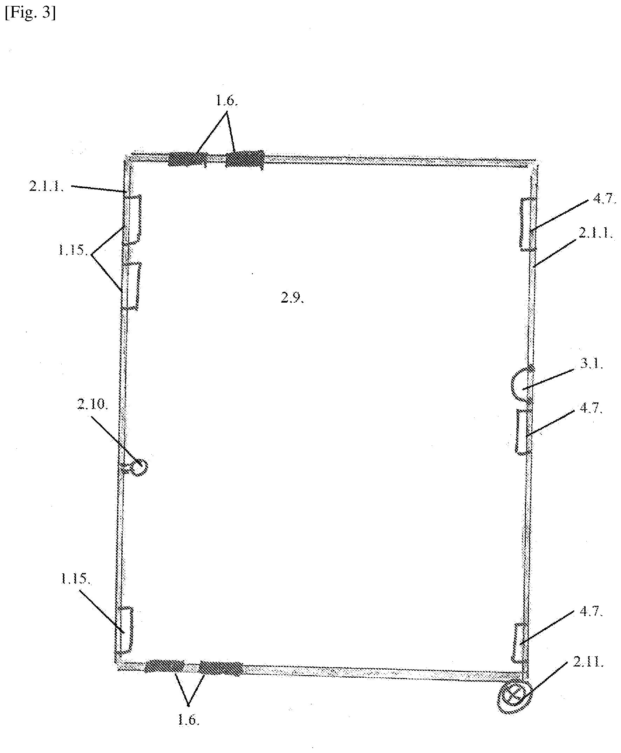

   [Fig.3] represent a detail of the inner side panel,
**Fig.4**

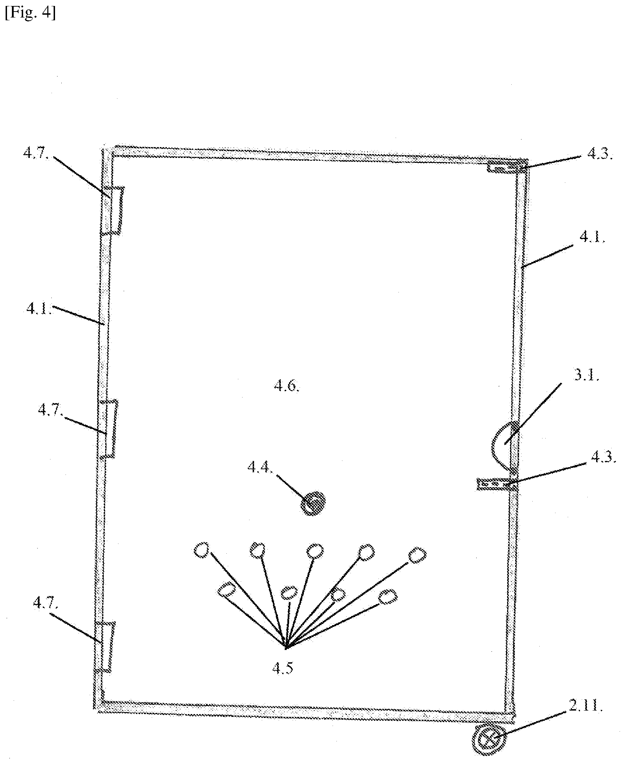

   [Fig.4] represent a detail of the door,
**Fig.5**

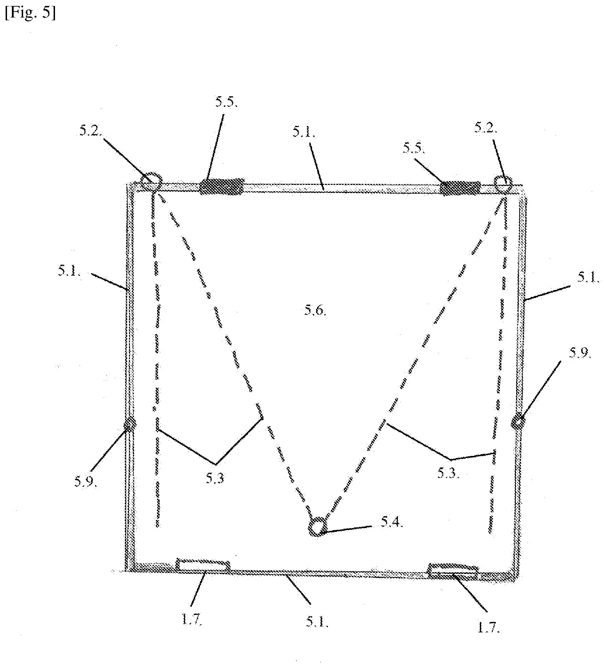

   [Fig.5] represent a detail of the canopy,
**Fig.6**

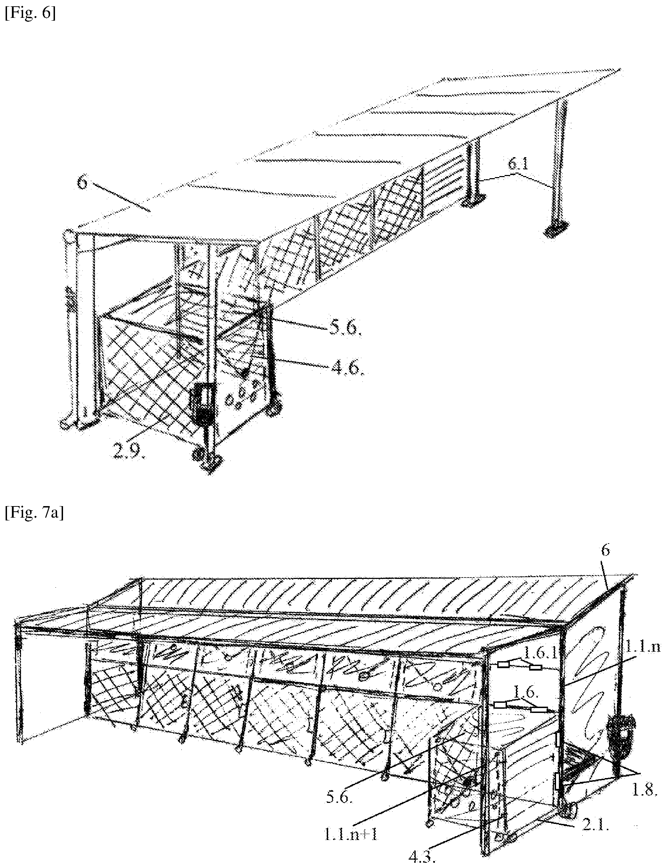

   [Fig.6] represent an embodiment of the variable collapsible pen with one row of 6 frames with a total of 6 boxes,
**Fig.7a**
   [Fig.7a] represent a embodiment of the variable folding box/pen with one row of 7 frames provided with a total of 7 boxes and a bench,
**Fig.7b**

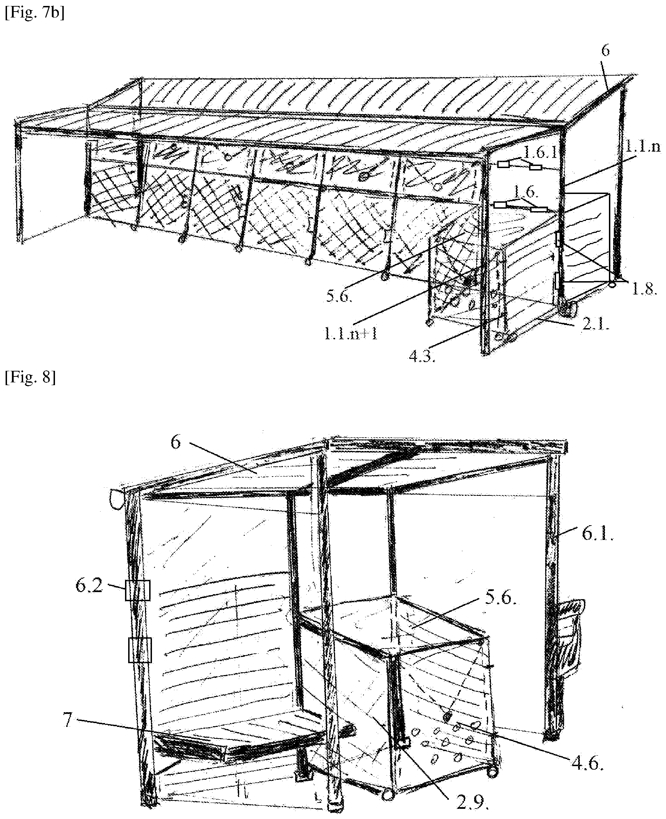

   [Fig.7b] represent an embodiment of the variable collapsible pen with two rows of 7 frames provided with a total of 14 boxes,
**Fig.8**
   [Fig.8] represent an embodiment of the variable collapsible pen for one dog with a bench,
**Fig.9**

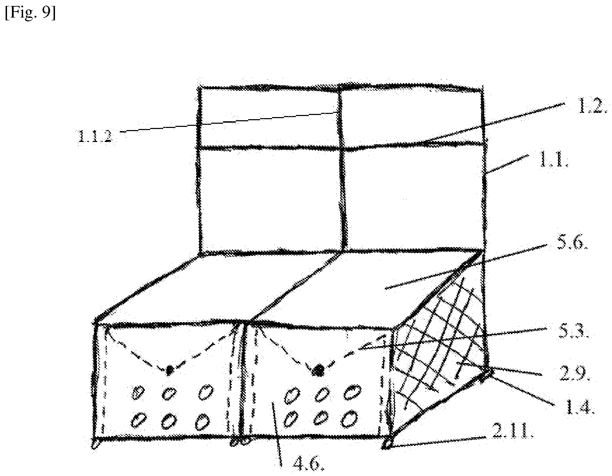

   [Fig.9] represent a detail of an embodiment of the variable collapsible pen for 2 dogs,

### Examples

### Example 1

An example embodiment of the variable collapsible pen especially for dogs according to the present invention is illustrated in Figs. 1 to 6. The variable collapsible pen comprises a row of n equals 6 of rear frames 1 from corrosion-resistant material, provided with backs. Each rear frame 1 comprises two stems, the n-th stem 1.1.n fitted with a foot 1.4 at the bottom with anchoring holes and the (n+1)-th stem 1.1.n+1 fitted with a foot 1.4 at the bottom with anchoring holes, interconnected at lest with the top crossbeam 1.2, center crossbeam 1.16 and bottom crossbeam 1.3.

The first stem 1.1.1 is provided in its bottom half under the level of the center crossbeam 1.16 at least on one side with three hinges 1.8 for the outer side panel, with which it is connected to the side panel frame 2.1, filled with an opaque panel 2.9 provided in its bottom third with a horizontal flat bar 2.3 affixed to the side panel frame 2.1 provided with the counterpart 2.10 of the locking mechanism.

The center crossbeam 1.16 is provided with at least two roof hinges 1.7 with which it is connected to the roof frame 5.1 with roof panel 5.6, provided with two locks 5.5 against unintentional folding of the canopy 5, and two first mounts 5.9 of the roof spring which are connected through the roof spring 1.10 with the second mounts 1.9 of the roof spring in the top part of the stem 1.1.n and 1.1.n+1.

The top crossbeam 1.2 is provided with two counterparts 1.6.1 of the lock against unintentional folding of the canopy 5.

The second up to the seventh stems 1.1.2 to 1.1.7 are provided in their bottom half under the level of the center crossbeam 1.16 on one side with three hinges 1.15 of the inner side panel, with which it is connected to the (n-1)-th side panel frame 2.1.1, provided with a lock 1.6 against unintentional opening having an opaque panel 2.9 and which is connected via door hinges 4.7 with the door frame 4.1 with a transparent perforated door panel 4.6 and provided with a door locking mechanism 4.3.

The second up to the seventh outer side panels are provided from the outer side with a horizontal flat bar 2.3 affixed to the inner side panel frame 2.1 and provided with the counterpart 2.10 of the locking mechanism. The roof 6 overlapping the pen is preferably fixed to the stems 1.1.1 to 1.1.7 from above. The roof 6 is additionally supported by pillars 6.1 provided with holders 6.2 for accessories selected from the group of wastebaskets, bags, disposable absorbent floor mats, disposable gloves, disposable cleaning disinfectant wipes, treats, toys, disposable bowls, water barrels.

### Example 2

Another example embodiment of the invention is shown in [Fig.9], and the details in Figs. 1 to 5. The basis of the construction is similar to the previous example. In this embodiment, the variable collapsible pen comprises two rear frames 1 side by side. Stem 1.1.2 is common to both frames. In this variant, the stems are provided with holes 1.5 for attachment to the wall, which also forms the back. The horizontal flat bar 2.3 is provided with mounts 2.2 for the chain 2.4 with snap-ring 2.5 for small dogs up to 35 cm in size, and chain 2.6 with snap-ring 2.7 for medium dogs of size from 35 to 43 cm at withers.

### Example 3

Another example embodiment of the invention is shown in [Fig.7a], and the details in Figs. 1 to 5. The basis of the design is similar to Example 1. In this case, the number of frames n is 7. Each door frame 4.1 is provided with a collapsible handle 4.2 and the inner side frame 2.1.1 is provided on the outside with a collapsible side handle 3.1. The perforation of the transparent breathable door panel 4.6 is implemented by circular ventilation holes 4.5 with a diameter of 2 cm. The inner side panel frame 2.1.1, the outer panel frame 2.1, and the door frame 4.1 on the side away from the rear frame 1 are provided with a castor wheel 2.11. The canopy 5 is provided with an elastic rope 5.3 with a ring 5.4 fixed in the middle for attachment to mount 4.4 of ring 5.4 of the elastic rope 5.3, located on the outer side of panel 4.6 of the door frame 4.1, and fixed with two mounts 5.2 of the elastic rope. The free space under the overhanging roof 6 from the rear side of the variable pen is provided with a bench 7 and a table.

### Example 4

Another example embodiment of the invention is shown in [Fig.7b], and the details in Figs. 1 to 5. It is based on the previous example, the solution is, however, bilateral, meaning that the variable pen is made of two rows of boxes back to back. The first stem 1.1.1 is provided in its bottom half under the level of the center crossbeam on both sides with at least three hinges 1.8 for the outer side panel, with which it is connected to the side panel frame 2.1, and the second up to (n+1)-th stems 1.1.2 to 1.1.n+1 are provided in their bottom half under the level of the center crossbeam on both sides with at least three hinges 1.15 for the inner side panel, with which it is connected to the inner panel frame 2.1.1.

The bottom crossbeam 1.3 is provided on both sides at least with the mount 1.11 of chain 1.12 with snap-ring 1.13 and snap-ring mount 1.14. The chain 1.12 is designated for large dogs of size above 43 cm at withers. The canopy 5 and/or roof 6 are preferably provided with a camera system from the inner side. The roof 6 is additionally provided with a solar panel for the electrical systems like lighting, heating, locking, audio guide. The outer side panel frame 2.1 is provided with a fixed handle 2.8 on the outer side. The outer side panel frame 2.1 is provided with a lock 1.6 against unintentional opening, and the inner side panel frame 2.1.1 is provided with a lock 1.6 against unintentional opening. The locks 1.6 against unintentional opening are provided with magnets. The inner side panel hinges 1.15 and the outer side panel hinges 1.8 have the angle of opening of 90°, and the door hinges 4.7 and the roof hinges 1.7 have the angle of opening of 180°. The transparent panel 4.6 is made of tinted plexiglass, and the clear panel 5.6 is made of polycarbonate with a UV film. The opaque panel 2.9 is made of recycled plastic.

### Example 5

Another example embodiment of the invention is shown in [Fig.8], and the details in Figs. 1 to 5. The design is again based on Example 1. In this case, there is, however, only one pen frame for one dog. On the free space under the roof 6 beside the box itself, a bench 7 is mounted. The transparent panel 4.6 and the clear panel 5.6 are made of clear plexiglass. The opaque panel 2.9 is washable and made of plastic. The pen is provided with a disinfectant coating. The floor in the space for unfolding the pen is provided with an impact rubber plate.

The above examples only illustrate several possible embodiments of the variable folding pen according to the present invention. The final design will always depend on the requirements of the client, it is possible, for example, to use the side panels for commercial or paid advertising, the basic design may be a combination of different colors, while adhering to the principle of the invention. It is clear to the expert skilled in the art that it is possible to replace the elements used by equivalents which fulfill identical functionality and usability of the device.

### Industrial Applicability

The variable collapsible pen especially for dogs according to the present invention can be used especially in all public places where it is not possible to take a dog with you, for example at shops, cemeteries, post offices, parking lots, offices, schools and kindergartens, medical facilities, restaurants, parks, exhibition grounds, playgrounds and sports grounds. It can be used at various rest areas for tourists, motorists, etc.

### Reference Signs List

1 - rear frame
1.1.n - n-th stem
1.1.n+1 - (n+1)-th stem
1.2 - top crossbeam
1.3 - bottom crossbeam
1.4 - foot
1.5 - openings
1.6 - side panel lock
1.7 - roof hinges
1.8 - side panel hinge
1.9 - second spring mounts
1.10 - spring
1.11 - mount of chain for large dogs
1.12 - chain for large dogs
1.13 - snap-ring for large dogs
1.14 - mount of snap-ring for large dogs
1.15 - inner side panel hinges
1.16 - center crossbeam
1.6.1 - lock counterpart
2.1 - outer side panel frame
2.1.1 - inner side panel frame
2.2 - chain mount for small dogs
2.3 - horizontal flat bar
2.4 - chain for small dogs
2.5 - snap-ring for small dogs
2.6 - chain for medium dogs
2.7 - snap-ring for medium dogs
2.8 - fixed handle
2.9 - opaque panel
2.10 - counterpart of the side panel locking mechanism
2.11- rotating wheel
3.1 - collapsible side panel handle
4.1 - door frame
4.2 - collapsible door handle
4.3 - door locking mechanism
4.4 - rope ring mount
4.5 - ventilation holes
4.6 - transparent panel
4.7 - door hinges
5 - canopy
5.1 - roof frame
5.2 - elastic rope mount
5.3 - elastic rope
5.4 - rope ring
5.5 - safety against unwanted roof collapsing
5.6 - roof panel
5.9 - first spring mounts
6 - roof
6.1 - pillar
6.2 - accessories holder
7 - bench

## Claims

1. *A variable collapsible pen especially for dogs, comprising:*
*at least one rear frame (1.1) made of a corrosion-resistant material, provided with a back and formed by stems (1.1.n, 1.1.n+1) of corrosion-resistant material,*
*wherein each rear frame (1.1) comprises a first stem (1.1.n) fitted with a foot (1.4) at the bottom with anchoring holes and a second stem (1.1.n+1) fitted with a foot (1.4) at the bottom with anchoring holes,*
*wherein the first stem (1.1.n) and the second stem (1.1.n+1) are interconnected at least with a top crossbeam (1.2), a center crossbeam (1.16) and a bottom crossbeam (1.3), the crossbeams (1.2, 1.16, 1.3) being made of corrosion-resistant material,*
*wherein the first stem (1.1.n) is provided in its bottom half under the level of the center crossbeam (1. 16) at least on one side with three hinges (1.8) with which the first stem (1.1.n) is connected to a first side panel frame (2.1) filled with an opaque panel (2.9),*
*wherein the first side panel frame (2.1) is provided on its inner side in its bottom third with a horizontal flat bar (2.3) affixed to the first side panel frame (2.1) and provided with a counterpart (2.10) of a locking mechanism (4.3),*
*wherein the center crossbeam (1.16) is provided with at least two roof hinges (1.7), with which it is connected to a roof frame (5.1) with a roof panel (5.6) forming a canopy (5),*
*wherein the roof frame (5.1) is provided with at least two locks (5.5) against unintentional folding of the canopy (5), and at least two first mounts (5.9) of a respective roof spring (1.10),*
*wherein the roof springs (1.10) are connected at the respective first mounts (5.9) to the roof frame (5.1) and with respective second mounts (1.9) to the top part of the first and second stem (1.1.n, 1.1.n+1),*
*wherein the top crossbeam (1.2) is provided with two counterparts (1.6.1) of the locks (5.5) against unintentional folding of the canopy (5) and*
*wherein the second stem (1.1.n+1) is provided in its bottom half under the level of the center crossbeam (1.16) at least on one side with at least three hinges (1.15) of a second side panel, with which the second stem (1.1.n+1) is connected to the second side panel frame (2.1),*
*wherein the second side panel frame (2.1) is provided with a lock (1.6) against unintentional opening,*
*wherein the second side panel frame (2.1) has an opaque panel (2.9) and*
*wherein the second side panel frame (2.1) is connected via door hinges (4.7) with a door frame (4.1) with a transparent perforated door panel (4.6) provided with a locking mechanism (4.3), and*
*wherein the second side panel frame (2.1) is provided with a counterpart (2.10) of the locking mechanism.*

2. *A variable collapsible pen especially for dogs according to Claim 1, **characterized in that** the stems are provided with holes (1.5) for mounting on a wall, which at the same time forms the back.*

3. *A variable collapsible pen especially for dogs according to Claim 1 or 2, **characterized in that** the door frame (4.1) is provided with a collapsible door handle (4.2) and the second side panel frame (2.1) is provided with a collapsible side panel handle (3.1) from the outside.*

4. *A variable collapsible pen especially for dogs according to Claim 1 to 3, **characterized in that** the second side panel frame, the first side panel frame (2.1) and also the door frame (5.1) are provided on the bottom on the side facing away from the rear frame (1.1) with a castor wheel (2.11).*

5. *A variable collapsible pen especially for dogs according to Claim 1 to 4, **characterized in that** the horizontal flat bar (2.3) is provided with mounts (2.2) for a chain (2.4) with a snap-ring (2.5) for small dogs, and for a chain (2.6) with a snap-ring (2.7) for medium dogs and*/*or the bottom crossbeam (1.3) is provided at least on one side with one mount (1.11) of a chain (1.12) with a snap-ring (1.13), and a mount for a snap-ring (1.14) for large dogs.*

6. *A variable collapsible pen especially for dogs according to Claim 1 to 5, **characterized in that** the canopy (5) is provided with an elastic rope (5.3) with a ring (5.4) fixed in the middle for attachment to mount (4.4) of ring (5.4) of the elastic rope (5.3) located on the outer side of panel (4.6) of the door frame (4.1), and fixed with two mounts (5.2).*

7. *A variable collapsible pen especially for dogs according to Claim 1 to 6, **characterized in that** on the stems (1.1.1 to 1.1.n+1), the roof (6) is fixed from above, which overhangs the pen.*

8. *A variable collapsible pen especially for dogs according to Claim 7, **characterized in that** the roof (6) is additionally supported by pillars (6.1) provided with holders (6.2) for accessories selected from the group of wastebaskets, bags, disposable absorbent floor mats, disposable gloves, disposable cleaning disinfectant wipes, treats, toys, disposable bowls, water barrels.*

9. *A variable collapsible pen especially for dogs according to Claim 7 or 8, **characterized in that** the canopy (5) and*/*or roof (6) are provided with a camera system on the inner side.*

10. *A variable collapsible pen especially for dogs according to Claim 7 to 9, **characterized in that** the roof (6) and*/*or canopy (5) are provided with a solar panel for electrical system selected from the group of: lighting, heating, locking, audio guide, software-controlled actuator for both folding and unfolding, and software-controlled controller for use of the variable collapsible pen.*

11. *A variable collapsible pen especially for dogs according to Claim 1 to 10, **characterized in that** the first side panel frame and the second side panel frame (2.1) are both provided with a lock (1.6) against unintentional opening.*

12. *A variable collapsible pen especially for dogs according to Claim 1 to 11, **characterized in that** the hinges (1.15) of the second side panel frame (2.1) and the hinges (1.8) of the first side panel frame (2.1) have an angle of opening of 90°, and the door hinge (4.7) and the roof hinge (1.7) have an angle of opening of 180°.*

13. *A variable collapsible pen especially for dogs according to Claim 1 to 12, further comprising a floor provided with an impact rubber plate.*

14. *A variable collapsible pen especially for dogs according to Claim 1 to 13, **characterized in that** the transparent perforated door panel (4.6) and the roof panel (5.6) are made of materials selected from the group of clear plexiglass, tinted plexiglass, polycarbonate with a UV film and*/*or the opaque panel (2.9) is washable and selected from the group of plastic, recycled plastic.*

## Patentansprüche

1. Variabler zusammenklappbarer Laufstall, insbesondere für Hunde, umfassend:
mindestens einen hinteren Rahmen (1.1) aus einem korrosionsbeständigen Material, der mit einer Rückseite versehen und durch Schäfte (1.1.n, 1.1.n+1) aus korrosionsbeständigem Material gebildet ist,
wobei jeder hintere Rahmen (1.1) einen ersten Schaft (1.1.n) mit einem unten mit Verankerungslöchern versehenen Fuß (1.4) und einen zweiten Schaft (1.1.n+1) mit einem unten mit Verankerungslöchern versehenen Fuß (1.4) umfasst,
wobei der erste Schaft (1.1.n) und der zweite Schaft (1.1.n+1) zumindest mit einem oberen Querträger (1.2), mittleren Querträger (1.16) und unteren Querträger (1.3) miteinander verbunden sind, wobei die Querträger (1.2, 1.16, 1.3) aus korrosionsbeständigem Material bestehen,
wobei der erste Schaft (1.1.n) in seiner unteren Hälfte unter dem Niveau des mittleren Querträgers (1.16) zumindest einseitig mit drei Scharnieren (1.8) versehen ist, mit denen der erste Schaft (1.1.n) mit einem ersten Seitenwandrahmen (2.1) verbunden ist, der mit einer blickdichten Platte (2.9) gefüllt ist,
wobei der erste Seitenwandrahmen (2.1) auf seiner Innenseite in seinem unteren Drittel mit einem horizontalen Flachstab (2.3) versehen ist, der an dem ersten Seitenwandrahmen (2.1) befestigt ist, der mit dem Gegenstück (2.10) eines Verriegelungsmechanismus versehen ist,
wobei der mittlere Querträger (1.16) mit mindestens zwei Dachscharnieren (1.7) versehen ist, mit denen er mit einer eine Überdachung (5) bildenden Dachplatte (5.6) am Dachrahmen (5.1) befestigt ist,
wobei der Dachrahmen (5.1) mit mindestens zwei Verriegelungen (5.5) gegen unbeabsichtigtes Falten der Überdachung (5) und mindestens zwei ersten Halterungen (5.9) einer jeweiligen Dachfeder (1.10) versehen ist,
wobei die Dachfedern (1.10) an den jeweiligen ersten Halterungen (5.9) mit dem Dachrahmen (5.1) und mit jeweiligen zweiten Halterungen (1.9) mit dem oberen Teil des ersten und zweiten Schafts (1.1.n, 1.1.n+1) verbunden sind
wobei der obere Querträger (1.2) mit zwei Gegenstücken (1.6.1) der Verriegelungen (5.5) gegen unbeabsichtigtes Falten der Überdachung (5) versehen ist und
wobei der zweite Schaft (1.1.n+1) in seiner unteren Hälfte unter dem Niveau des mittleren Querträgers (1.16) zumindest einseitig mit mindestens drei Scharnieren (1.15) einer zweiten Seitenwand versehen ist, mit denen der zweite Schaft (1.1.n+1) mit dem zweiten Seitenwandrahmen (2.1) verbunden ist,
wobei der zweite Seitenwandrahmen (2.1) mit einer Verriegelung (1.6) gegen unbeabsichtigtes Öffnen versehen ist,
wobei der zweite Seitenwandrahmen (2.1) eine blickdichte Platte (2.9) aufweist und
wobei der zweite Seitenwandrahmen (2.1) über Türscharniere (4.7) mit dem Türrahmen (4.1) mit einem transparenten perforierten Türblatt (4.6) verbunden ist, das mit einem Verriegelungsmechanismus (4.3) versehen ist, und
wobei der zweite Seitenwandrahmen (2.1) mit dem Gegenstück (2.10) des Verriegelungsmechanismus versehen ist.

2. Variabler zusammenklappbarer Laufstall insbesondere für Hunde nach Anspruch 1, **dadurch gekennzeichnet, dass** die Schäfte mit Löchern (1.5) zur Montage an einer Wand versehen sind, die gleichzeitig die Rückseite bildet.

3. Variabler zusammenklappbarer Laufstall insbesondere für Hunde nach Anspruch 1 oder 2, **dadurch gekennzeichnet, dass** der Türrahmen (4.1) mit einem zusammenklappbaren Türgriff (4.2) versehen ist und der zweite Seitenwandrahmen (2.1) außen mit einem zusammenklappbaren Seitenwandgriff (3.1) versehen ist.

4. Variabler zusammenklappbarer Laufstall insbesondere für Hunde nach Anspruch 1 bis 3, **dadurch gekennzeichnet, dass** der zweite Seitenwandrahmen, der erste Seitenwandrahmen (2.1) sowie der Türrahmen (5.1) an der Unterseite auf der dem hinteren Rahmen (1.1) abgewandten Seite mit einer Lenkrolle (2.11) versehen sind.

5. Variabler zusammenklappbarer Laufstall insbesondere für Hunde nach Anspruch 1 bis 4, **dadurch gekennzeichnet, dass** der horizontale Flachstab (2.3) mit Halterungen (2.2) für eine Kette (2.4) mit einem Schnappring (2.5) für kleine Hunde und für eine Kette (2.6) mit einem Schnappring (2.7) für mittlere Hunde und/oder der untere Querträger (1.3) mindestens einseitig mit einer Halterung (1.11) einer Kette (1.12) mit einem Schnappring (1.13) und einer Halterung für einen Schnappring (1.14) für große Hunde versehen ist.

6. Variabler zusammenklappbarer Laufstall insbesondere für Hunde nach Anspruch 1 bis 5, **dadurch gekennzeichnet, dass** die Überdachung (5) mit einem elastischen Seil (5.3) versehen ist, an dem in der Mitte ein Ring (5.4) befestigt ist, der an der Halterung (4.4) des Rings (5.4) des elastischen Seils (5.3) befestigt ist, das sich an der Außenseite der Platte (4.6) des Türrahmens (4.1) befindet, und mit zwei Halterungen (5.2) befestigt ist.

7. Variabler zusammenklappbarer Laufstall insbesondere für Hunde nach Anspruch 1 bis 6, **dadurch gekennzeichnet, dass** auf den Schäften (1.1.1 bis 1.1n+1) von oben her ein über den Laufstall überstehendes Dach (6) befestigt ist.

8. Variabler zusammenklappbarer Laufstall insbesondere für Hunde nach Anspruch 7, **dadurch gekennzeichnet, dass** das Dach (6) zusätzlich von Säulen (6.1) getragen wird, die mit Halterungen (6.2) für Zubehör versehen sind, das aus der Gruppe von Abfallkörben, Beuteln, saugfähigen Einwegbodenmatten, Einweghandschuhen, Einweg-Desinfektionstüchern, Leckereien, Spielzeug, Einwegschalen, Wasserfässern ausgewählt ist.

9. Variabler zusammenklappbarer Laufstall insbesondere für Hunde nach Anspruch 7 oder 8, **dadurch gekennzeichnet, dass** die Überdachung (5) und/oder das Dach (6) mit einem Kamerasystem auf der Innenseite versehen sind.

10. Variabler zusammenklappbarer Laufstall insbesondere für Hunde nach Anspruch 7 bis 9, **dadurch gekennzeichnet, dass** das Dach (6) und/oder die Überdachung (5) mit einem Solarpanel für ein elektrisches System versehen sind, das aus der Gruppe: Beleuchtung, Heizung, Verriegelung, Audioguide, softwaregesteuerter Aktuator sowohl zum Zusammenklappen als auch zum Entfalten und softwaregesteuerte Steuerung zur Verwendung des variablen zusammenklappbaren Laufstalls ausgewählt ist.

11. Variabler zusammenklappbarer Laufstall insbesondere für Hunde nach Anspruch 1 bis 10, **dadurch gekennzeichnet, dass** der erste Seitenwandrahmen und der zweite Seitenwandrahmen (2.1) beide mit einer Verriegelung (1.6) gegen unbeabsichtigtes Öffnen versehen sind

12. Variabler zusammenklappbarer Laufstall insbesondere für Hunde nach Anspruch 1 bis 11, **dadurch gekennzeichnet, dass** die Scharniere (1.15) der zweiten Seitenwand (2.1) und die Scharniere (1.8) des ersten Seitenwandrahmens (2.1) den Öffnungswinkel von 90° und das Türscharnier (4.7) und das Dachscharnier (1.7) den Öffnungswinkel von 180° aufweisen.

13. Variabler zusammenklappbarer Laufstall insbesondere für Hunde nach Anspruch 1 bis 12, ferner umfassend einen Boden, der mit einer Gummiprallplatte versehen ist.

14. Variabler zusammenklappbarer Laufstall insbesondere für Hunde nach Anspruch 1 bis 13, **dadurch gekennzeichnet, dass** die transparente perforierte Türplatte (4.6) und Dachplatte (5.6) aus Materialien bestehen, die aus der Gruppe von klarem Plexiglas, getöntem Plexiglas, Polycarbonat mit einer UV-Folie ausgewählt sind und/oder die blickdichte Platte (2.9) waschbar und aus der Gruppe von Kunststoff, recyceltem Kunststoff ausgewählt ist.

## Revendications

1. Un enclos pliable variable notamment pour chiens, comprenant :
au moins un cadre arrière (1.1) en matériau résistant à la corrosion, muni d'un dos et formé de tiges (1.1.n, 1.1.n+1) en matériau résistant à la corrosion,
où chaque cadre arrière (1.1) comprend une première tige (1.1.n) pourvue d'un pied (1.4) en bas avec des trous d'ancrage et d'une deuxième tige (1.1.n+1) pourvue d'un pied (1.4) en bas avec des trous d'ancrage,
où la première tige (1.1.n) et la deuxième tige (1.1.n+1) sont reliées entre elles au moins via une traverse supérieure (1.2), une traverse centrale (1.16) et une traverse inférieure (1.3), les traverses (1.2, 1.16, 1.3) étant constituées d'un matériau résistant à la corrosion,
où la première tige (1.1.n) est pourvue, dans sa moitié inférieure, sous le niveau de la traverse centrale (1.16), au moins sur un côté, de trois charnières (1.8) avec lesquelles la première tige (1.1.n) est reliée à un premier cadre de panneau latéral (2.1) rempli d'un panneau opaque (2.9),
où le premier cadre de panneau latéral (2.1) est pourvu, sur sa face intérieure, dans son tiers inférieur, d'une barre plate horizontale (2.3) fixée au premier cadre de panneau latéral (2.1) pourvue d'une contrepartie (2.10) d'un mécanisme de verrouillage,
où la traverse centrale (1.16) est pourvue d'au moins deux charnières de toit (1.7), avec lesquelles elle est reliée à la charpente de toit (5.1) avec un panneau de toit (5.6) formant un auvent (5),
où la charpente de toit (5.1) est pourvue d'au moins deux verrous (5.5) contre le pliage involontaire de l'auvent (5), et d'au moins deux premiers supports (5.9) d'un ressort de toit respectif (1.10),
les ressorts de toit (1.10) sont reliés au niveau des premiers supports respectifs (5.9) à la charpente de toit (5.1 et aux seconds supports respectifs (1.9) à la partie supérieure de la première et de la seconde tige (1.1.n, 1.1.n +1)
où la traverse supérieure (1.2) est pourvue de deux contreparties (1.6.1) des verrous (5.5) contre le pliage involontaire de l'auvent (5) et
où la deuxième tige (1.1.n+1) est pourvue, dans sa moitié inférieure, sous le niveau de la traverse centrale (1.16), au moins sur un côté, d'au moins trois charnières (1.15) d'un deuxième panneau latéral, avec lesquelles la deuxième tige ( 1.1.n+1) est relié au deuxième cadre de panneau latéral (2.1),
où le deuxième cadre de panneau latéral (2.1) est pourvu d'un verrou (1.6) contre une ouverture involontaire,
où le deuxième cadre de panneau latéral (2.1) comporte un panneau opaque (2.9) et
où le deuxième cadre de panneau latéral (2.1) est relié via des charnières de porte (4.7) au cadre de porte (4.1) avec un panneau de porte perforé transparent (4.6) pourvu d'un mécanisme de verrouillage (4.3), et
où le deuxième cadre de panneau latéral (2.1) est pourvue d'une contrepartie (2.10) du mécanisme de verrouillage.

2. Enclos pliable variable notamment pour chiens selon la revendication 1, **caractérisé en ce que** les tiges sont pourvues de trous (1.5) pour un montage sur un mur, qui forme en même temps le dos.

3. Enclos pliable variable notamment pour chiens selon la revendication 1 ou 2, **caractérisé en ce que** le cadre de porte (4.1) est pourvu d'une poignée de porte pliable (4.2) et le deuxième cadre de panneau latéral (2.1) est pourvu d'une poignée de panneau latéral pliable (3.1) de l'extérieur.

4. Enclos pliable variable notamment pour chiens selon l'une quelconque des revendications 1 à 3, **caractérisé en ce que** le deuxième cadre de panneau latéral, le premier cadre de panneau latéral (2.1) ainsi que le cadre de porte (5.1) sont pourvus en bas, du côté opposé, au cadre arrière (1.1) d'une roulette pivotante (2.11).

5. Enclos pliable variable notamment pour chiens selon l'une quelconque des revendications 1 à 4, **caractérisé en ce que** la barre plate horizontale (2.3) est pourvue de supports (2.2) pour une chaîne (2.4) avec un circlip (2.5) pour petits chiens, et pour une chaîne (2.6) avec un circlip (2.7) pour chiens de taille moyenne et/ou la traverse inférieure (1.3) est pourvue, au moins sur un côté, d'un support (1.11), d'une chaîne (1.12) avec un circlip (1.13), et d'un support pour un circlip (1.14) pour les grands chiens.

6. Enclos pliable variable notamment pour chiens selon l'une quelconque des revendications 1 à 5, **caractérisé en ce que** l'auvent (5) est pourvue d'une corde élastique (5.3) avec un anneau (5.4) fixé au milieu pour la fixation au support (4.4) de l'anneau (5.4) de la corde élastique (5.3) situé sur le côté extérieur du panneau (4.6) du cadre de porte (4.1), et fixé avec deux supports (5.2).

7. Enclos pliable variable notamment pour chiens selon les revendications 1 à 6, **caractérisé en ce que** les tiges (1.1.1 à 1.1n+1), le toit (6) est fixé par le dessus, qui surplombe l'enclos.

8. Enclos pliable variable notamment pour chiens selon la revendication 7, **caractérisé en ce que** le toit (6) est en outre soutenu par des piliers (6.1) pourvus de supports (6.2) pour accessoires choisis dans le groupe des corbeilles, sacs, tapis de sol absorbants jetables, gants jetables, lingettes désinfectantes nettoyantes jetables, friandises, jouets, bols jetables, barils d'eau.

9. Enclos pliable variable notamment pour chiens selon la revendication 7 ou 8, **caractérisé en ce que** l'auvent (5) et/ou le toit (6) sont pourvus d'un système de caméra sur sa face intérieure.

10. Enclos pliable variable notamment pour chiens selon l'une quelconque des revendications 7 à 9, **caractérisé en ce que** le toit (6) et/ou l'auvent (5) sont pourvus d'un panneau solaire pour système électrique choisi dans le groupe de: éclairage, chauffage, verrouillage, audioguide, actionneur piloté par logiciel pour le pliage et le dépliage, et contrôleur piloté par logiciel pour l'utilisation de l'enclos pliable variable.

11. Enclos pliable variable notamment pour chiens selon les revendications 1 à 10, **caractérisé en ce que** le premier cadre de panneau latéral et le deuxième cadre de panneau latéral (2.1) sont tous deux pourvus d'un verrou (1.6) contre une ouverture involontaire

12. Enclos pliable variable notamment pour chiens selon les revendications 1 à 11, **caractérisé en ce que** les charnières (1.15) du deuxième panneau latéral (2.1) et les charnières (1.8) du premier cadre de panneau latéral (2.1) ont l'angle d'ouverture de 90°, et la charnière de porte (4.7) et la charnière de toit (1.7) ont l'angle d'ouverture de 180°.

13. Enclos pliable variable notamment pour chiens selon l'une quelconque des revendications 1 à 12, comprenant en outre un plancher pourvu d'une plaque d'amortissement en caoutchouc.

14. Enclos pliable variable notamment pour chiens selon l'une quelconque des revendications 1 à 13, **caractérisé en ce que** le panneau de porte perforé transparent (4.6) et le panneau de toit (5.6) sont faits de matériaux choisis dans le groupe du plexiglas transparent, du plexiglas teinté, du polycarbonate avec un film UV et/ou le panneau opaque (2.9) est lavable et choisi dans le groupe du plastique, du plastique recyclé.
